Europäisches Patentamt

European Patent Office

Office européen des brevets

(19)

(11) Publication number: **0 231 581 B1**

(12) **EUROPEAN PATENT SPECIFICATION**

(45) Date of publication of patent specification: **22.04.92**  (51) Int. Cl.⁵: **G02B 6/44**

(21) Application number: **86306849.0**

(22) Date of filing: **04.09.86**

The file contains technical information submitted after the application was filed and not included in this specification

(54) **Metal-encased light conductor.**

(30) Priority: **27.12.85 US 813789**

(43) Date of publication of application:
**12.08.87 Bulletin 87/33**

(45) Publication of the grant of the patent:
**22.04.92 Bulletin 92/17**

(84) Designated Contracting States:
**DE FR GB IT**

(56) References cited:
**DE-A- 3 101 999        DE-U- 8 510 954
GB-A- 2 064 811        GB-A- 2 152 235
US-A- 4 214 693        US-A- 4 334 733
US-A- 4 432 605**

(73) Proprietor: **CONAX BUFFALO CORPORATION
2300 Walden Avenue
Buffalo New York 14225(US)**

(72) Inventor: **Randazzo, Matthew John
34 Greenfield Drive
Tonawanda New York 14150(US)**

(74) Representative: **Knott, Stephen Gilbert et al
MATHISEN, MACARA & CO. The Coach
House 6-8 Swakeleys Road
Ickenham Uxbridge Middlesex UB10 8BZ(GB)**

Rank Xerox (UK) Business Services

## Description

This invention relates to light conductors, and more particularly to an improved metal-encased light conductor comprising an optical fibre.

An optical fibre encased in a metal sheath which compresses an intermediate layer of material surrounding the optical fibre is known. For example, United States Patent No. 4,214,693 discloses a stranded conductor surrounded by electrical insulating material which in turn is surrounded by a metal sheath. The conductor may be stranded copper, or one or more of the conductors may be strands of a material suitable for use in "fibre optics", typically glass fibres or coated glass fibres, which may be used alone, without any metal conductors. The insulating material may be a thermoplastic material such as polytetrafluoroethylene, or a fully fluorinated copolymer of hexafluoropropylene and tetrafluoroethylene, or propylene polymers and copolymers. Where "fibre optics" material is used, the amount of other insulating material required is reduced, and may, in some cases, be entirely eliminated. The metal sheath is preferably made of stainless steel and is swaged. The end product is a wireline utilized to suspend a downhole tool in an earth borehole from an aboveground cable drum, and to transmit signals between the tool and above ground-equipment.

United States Patent No. 4,432,605 discloses a pressure resistant submarine cable in which one or more clad optical fibres are embedded in a cushion layer, e.g. of silicone rubber or polyethylene, which is surrounded by at least two drawn metallic layers having an adhesive layer therebetween, each metallic layer being formed by a wrapped strip having its side edges welded together longitudinally along the cable.

Also, United States Patent No. 4,381,141 discloses an optical fibre produced by preparing a preform of a core and cladding both made of metal halogenides or arsenic-selenium glass, applying a lubricant to the outer surface of the preform, vacuum sealing the preform within a metal pipe, made of copper or aluminium, and drawing the metal pipe through a die at a temperature below the melting point of the preform, to reduce diameter and elongate. The lubricant may be a fluorine type resin, a fluorine type polyolefin, a polyolefin polymer such as polyethylene or boron nitrides.

The aim of the present invention is to provide a metal-encased optical fibre light conductor having a good internal pressure boundary seal in an axial direction at temperatures down to as low as -40°C.

To this end, according to the invention there is provided a metal-encased light conductor comprising an optical fibre having a core surrounded by a cladding, a buffer layer coating the cladding and composed of a polyimide, a uniformly thick jacket surrounding the buffer and composed of a thermoplastic material having a melting point above 200°C, an epoxy film covering the jacket and curable at a temperature of at least 100°C, and a ductile metal sheath surrounding the film, said sheath having been mechanically reduced in diameter so as to compress the jacket, whereby the conductor has an internal boundary seal between the components of the conductor which is substantially pressure-tight, in that a minimum length of 15.24 cm (6 inches), is capable of withstanding an environment having a pressure of up to about 34475 kN/m$^2$ (5000 pounds per square inch) and having a temperature in the range of about -40°C to about 250°C without leaking.

Such a metal-encased light conductor is easily sealed externally, so that the light conductor is adapted to be used to penetrate a bulkhead, without producing microbending of the light conductor.

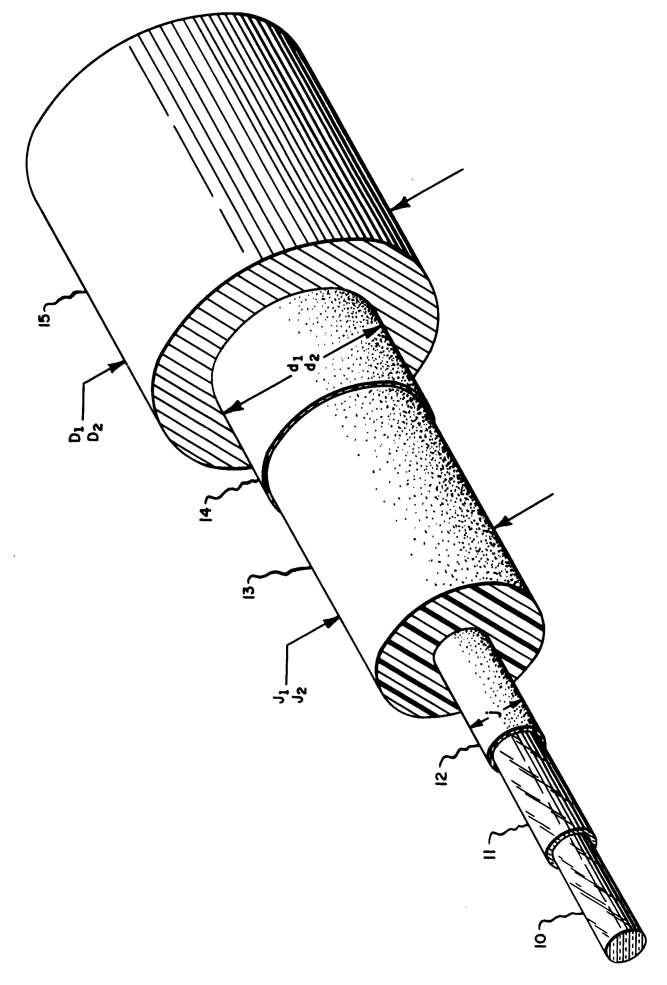

The invention will now be further described with reference to the accompanying drawing which shows a fragmentary perspective view of one example of a metal-encased light conductor embodying the present invention, in which portions of the component elements of the conductor have been successively broken away to reveal their external surfaces in elevation and their end faces in cross section.

The light conductor illustrated comprises an optical fibre including a core 10 surrounded by a cladding 11. Coating this cladding is a buffer 12. A uniformly thick thermoplastic jacket 13 surrounds the buffer, and the jacket is covered by a thin epoxy film 14. A mechanically reduced metal sheath surrounds the epoxy film and compresses the jacket 13.

The core 10 and cladding 11 may be made of any material suitable for use in forming an optical fibre, such as silica glass or quartz. Dimensionally the core 10 may typically have an outside diameter of about 200 microns (about 0.00787 inch), and the outside diameter of the cladding 11 will then typically be about 240 microns (0.00945 inch). This core/clad optical fibre is coated with a high strength and high temperature buffer, specifically a polyimide thermoplastic such as one marketed by E.L. duPont under the Trade Mark "Kapton". An optical fibre including such a core 10, cladding 11 and polyimide buffer 12 can be procured as a unitary commercial article.

The thermoplastic jacket 13 is applied as a uniformly thick layer over the buffer coating 12 in any suitable manner, preferably by extrusion. Relating the jacket 13 to an optical fibre having the typical dimensions previously mentioned, the jacket will typically have an outside diameter of about 914 microns (0.036 inch). A thermoplastic material capable of withstanding a temperature of at least 200°C is utilized. Preferably, it is either; a copolymer combining the carbon-fluorine backbone of fluorocarbons with perfluoroalkoxy side chains, such as resins marketed by E.L. dupont under the Trade Mark "Teflon PFA"; a polyether ether ketone, such as resins marketed by Imperial Chemical Industries Limited under the Trade Mark "Peek"; or an ethylene-tetra-fluoroethylene copolymer, such as resins marketed by E.I. duPont under the Trade Mark "Tefzel".

The thermoplastic jacket 13 is then wiped with a thin film 14 of a suitable high temperature epoxy adhesive material, such as "TRA-BOND 2211" or "TRA-BOND 2215" marketed by Tra-Con, Inc. The former is an epichlorohydrin/aromatic amine, and the latter is a bis-phenol A/anhydride. This film has no significant thickness.

The assembly is then slid into a metal sheath 15 suitably dimensioned internally to accommodate this assembly, before being mechanically reduced. Any excess of epoxy material is wiped off, or redistributed circumferentially about the jacket 13, by this insertion. The metal sheath may be made of any suitable ductile material such as stainless steel, titanium, nickel, or copper. If 304 stainless steel is considered as the metal of which the starting sheath is composed, it will have typically a wall thickness of about 254 microns (0.010 inch), an outside diameter of about 2032 microns (0.080 inch), and hence an inside diameter of a 1524 microns (0.060 inch). The starting metal sheath is then suitably mechanically reduced to reduce its inside diameter to slightly less than the outside diameter of the thermoplatic jacket 13, and thereby compress this jacket radially inwardly to embrace the inner elements 10-12 of the optical fibre. In this case, the metal sheath 15 with the assembly therewithin is swaged in two passes through hammer dies, successively having openings of 1574.8 microns (0.062 inch) and 1473.2 microns (0.058 inch). The wall of the metal sheath increases in thickness to about 304.8 microns (0.012 inch), as a result of this swaging. More importantly, the thermoplastic jacket 13 is placed in a state of compression, and this provides an effective continuous pressure boundary seal axially along the interfaces between the various elements of the optical fibre structure.

As a consequence of the mechanical reduction of the typical metal sheath previously described, there should be produced a reduction in area of the metal sheath by about 20%, ±1%. This can be expressed by the following equation:

$$\text{percentage of area reduction of metal sheath} = \frac{(A_1 - a_1) - (A_2 - a_2)}{A_1 - a_1}$$

where pre-swage:

$A_1$ = area of outside diameter $D_1$ of metal sheath

$a_1$ = area of inside diameter (bore) $d_1$ of metal sheath

and post-swage:

$A_2$ = area of outside diameter $D_2$ of metal sheath

$a_2$ = area of inside diameter $d_2$ of metal sheath

Since area is equal to $\pi r^2$ or $\frac{\pi}{4} D^2$, the above equation can be written as:

$$\text{percentage of area reduction of metal sheath} = \frac{(D_1{}^2 - d_1{}^2) - (D_2{}^2 - d_2{}^2)}{(D_1{}^2 - d_1{}^2)}$$

Substituting the dimensions stated in the above example:

$$\text{percentage of area reduction of metal sheath} = \frac{[0.08]^2 - [0.08 - 2(0.01)]^2 - [0.059]^2 + [0.059 - 2(0.012)]^2}{[0.08]^2 - [0.08 - 2(0.01)]^2}$$

$$= 19\%$$

The above-described reduction in area of the metal sheath 15 should compress the thermoplastic jacket 13 to produce a reduction in area of this jacket falling in the range of from about 15% to about 25%. Below this lower limit, the leakage rate may be too high and hence unacceptable, and above the higher limit the optical integrity of the core/clad/buffer assembly may be adversely affected.

The percentage of area reduction of the thermoplastic jacket 13 can be expressed by the following equation:

$$\text{percentage of area reduction of thermoplastic jacket} = \frac{(J_1{}^2 - j_1{}^2) - (J_2{}^2 - j_1{}^2)}{J_1{}^2 - j_1{}^2}$$

where pre-swage:

$J_1$ = original outside diameter of thermoplastic jacket

$j_1$ = inside diameter of thermoplastic jacket (equal to outside diameter of buffer)

and post-swage:

$J_2$ = reduced outside diameter of thermoplastic jacket

For example, assuming:

$J_1$ = 914.4 microns (0.036 inch)

$j_1$ = 254 microns (0.010 inch)

$J_2$ = 838.2 microns (0.033 inch)

and substituting these values in the above equation, there results:

$$\text{percentage of area reduction of thermoplastic jacket} = \frac{(0.036)^2 - (0.01)^2 - (0.033)^2 + (0.01)^2}{(0.036)^2 - (0.01)^2}$$

$$= \frac{(0.036)^2 - (0.033)^2}{(0.036)^2 - (0.01)^2}$$

$$= 17\%$$

Typical boundary seal leakage in a 15.24 cm (6 inch) long section of light conductor is less than $1 \times 10^{-6}$ standard cubic centimeters of helium per second at a pressure of 689.5 kN/m$^2$ (100 psi).

4

Percentage of area reduction of the thermoplastic jacket 13 related to the design basis leak for a 15.24 cm (6 inch) seal length can be tabulated as follows:

| % | Leak rate (scc He/sec) |
|---|---|
| 15 | $1 \times 10^{-6}$ |
| 25 | $1 \times 10^{-8}$ |

After swaging, the optical fibre structure is subjected to a temperature of about 100°C for 2 hours if the TRA-BOND 2211 epoxy adhesive was used, or to a temperature of about 220°C for 4 hours if the TRA-BOND 2215 epoxy adhesive was used, in order to cure the epoxy. While the cured epoxy film 14 has no significant thickness, it has been found essential to have the film if the final structure is employed in an environment where a cryogenic temperature as low as -40°C obtains and a continuous boundary seal, under either a high vacuum or a positive pressure as high as 34475 kN/M$^2$ (5000 psi), is to be maintained. It has also been found that if no epoxy film is employed and the same starting size assembly is swaged in a final pass having a hammer die opening of 1422.4 microns (0.056 inch), the resultant swaged assembly will have an effective boundary seal in a temperature range down to only 0°C, rather than to -40°C.

The improved metal encased light conductor in accordance with the invention may have various applications. For example, a plurality of such conductors can be used in a bulkhead feedthrough into a hydrogen atmosphere at 100°C, for association with optical fibre sensors on generator cables. As another example, a single conductor penetration can be used with sensors in the irradiation of fruit and vegetables. Still a further example is a three conductor penetration into a vacuum at room temperature, used in laser research. A further example is a two conductor arrangement for use in measuring stress on a tail section of aircraft. By using a copper sheath instead of a stainless steel sheath, a light conductor in accordance with the invention can be used in a radar system. Alternatively, by using for the metal sheath a type of stainless steel containing a high concentration of nickel, known as Hastaloly-C, the light conductor will be suitable for use in an acid environment.

The light conductor structure in accordance with the present invention isolates the area to seal around the exterior of the metal sheath to a very small area around each conductor, minimizing failure probability, and also allows for ease of replacement of conductors, especially in a multiple conductor penetration. As many as 52 conductors may be employed in a single penetration. Furthermore, the metal-encased light conductor structure is relatively immune to temperature cycling over a larger range than if the optical fibre were potted in an epoxy resin alone. The seal of the structure in accordance with the invention provides a seal dependent in effectiveness upon the length of the metal sheath, thus by lengthening the structure an easy way is provided to improve the pressure rating and leak rates.

While variations in the preferred optical fibre structure illustrated and described may occur to those skilled in the art without departing from the principle of the invention, it is intended that the scope of the present invention be determined by the appended claims considered in the light of the foregoing disclosure.

## Claims

1. A metal-encased light conductor comprising an optical fibre having a core (10) surrounded by a cladding (11), a buffer layer (12) coating the cladding and composed of a polyimide, a uniformly thick jacket (13) surrounding the buffer and composed of a thermoplastic material having a melting point above 200°C, an epoxy film (14) covering the jacket and curable at a temperature of at least 100°C, and a ductile metal sheath (15) surrounding the film, said sheath having been mechanically reduced in diameter so as to compress the jacket, whereby the conductor has an internal boundary seal between the components of the conductor which is substantially pressure-tight, in that a minimum length of 15.24 cm (6 inches), is capable of withstanding an environment having a pressure of up to about 3475 kN/m$^2$ (5000 pounds per square inch) and having a temperature in the range of about -40°C to about 250°C without leaking.

2. A light conductor according to claim 1, in which the sheath (15) compresses the thermoplastic jacket (13) such that the cross sectional area of the jacket (13) has been reduced by about 15 to 25%.

3. A light conductor according to claim 1 or claim 2, in which the epoxy film (14) is epichlorohydrin/aromatic amine cured at a temperature of about 100°C for about 2 hours.

**4.** A light conductor according to claim 1 or claim 2, in which the epoxy film (14) is bis-phenol A/anhydride cured at a temperature of about 220°C for about 4 hours.

**5.** A light conductor according to any one of the preceding claims, in which the thermoplastic material of the jacket (13) is a copolymer combining the carbon-fluorine backbone of fluorocarbons with perfluoroalkoxy side chains, or a polyether ether ketone, or an ethylene-tetra-fluoroethylene copolymer.

**Revendications**

**1.** Conducteur de lumière à gaine métallique, comprenant une fibre optique ayant une âme (10) entourée d'un revêtement (11), une couche tampon (12) entourant le revêtement et composée d'un polyimide, une enveloppe (13) d'épaisseur uniforme entourant la couche tampon et composée d'une matière thermoplastique ayant une température de fusion supérieure à 200 °C, un film époxyde (14) recouvrant l'enveloppe et pouvant polymériser à une température au moins égale à 100 °C, et une gaine d'un métal ductile (15) entourant le film, la gaine ayant subi une réduction mécanique de diamètre afin que l'enveloppe soit comprimée, si bien que le conducteur forme un joint interne d'étanchéité à la limite entre les éléments du conducteur qui est pratiquement étanche à la pression, et un tronçon minimal de 15,24 cm (6 pouces) peut supporter des conditions correspondant à une pression pouvant atteindre 34 475 kN/m$^2$ environ (5 000 livres par pouce carré) et à une température comprise entre environ -40 °C et 250 °C, sans fuite.

**2.** Conducteur de lumière selon la revendication 1, dans lequel la gaine (15) comprime l'enveloppe thermoplastique (13) afin que la section de l'enveloppe (13) ait subi une réduction d'environ 15 à 25 %.

**3.** Conducteur de lumière selon la revendication 1 ou 2, dans lequel le film époxyde (14) est du type épichlorhydrine-amine aromatique, polymérisé à une température d'environ 100 °C pendant 2 h environ.

**4.** Conducteur de lumière selon la revendication 1 ou 2, dans lequel le film époxyde (14) est du type bisphénol A-anhydride, polymérisé à une température d'environ 220 °C pendant 4 h environ.

**5.** Conducteur de lumière selon l'une quelconque des revendications précédentes, dans lequel la matière thermoplastique de l'enveloppe (13) est un copolymère qui combine un squelette de carbone-fluor des matières fluorocarbonées à des chaînes ramifiées perfluoroalcoxylées, ou une polyétheréthercétone, ou un copolymère d'éthylène et de tétra-fluoréthylène.

**Patentansprüche**

**1.** Ein metallummantelter Lichtleiter, welcher eine optische Faser mit einem Kern (10), der von einem Überzug (11) umgeben ist, aufweist, eine Pufferschicht (12), welche den Überzug bedeckt und aus einem Polyimid zusammengesetzt ist, eine gleichmäßig dicke Umhüllung (13), die den Puffer umgibt und aus einem thermoplastischen Material mit einem Schmelzpunkt oberhalb 200°C zusammengesetzt ist, einen Epoxidharzfilm (14), der die Umhüllung abdeckt und bei einer Temperatur von wenigstens 100°C härter ist, und eine den Film um/gebende dehnbare Metallschicht (15) umfaßt, wobei die Schicht im Durchmesser mechanisch so verkleinert worden ist, daß sie die Umhüllung zusammenpreßt, wodurch der Leiter eine innere Begrenzungsabdichtung zwischen den Komponenten des Leiters aufweist, welche im wesentlichen druckfest ist, in dem eine minimale Länge von 15,24 cm (6 inches) in der Lage ist, einer Umgebung mit einem Druck von bis zu ungefähr 34475 kN/m$^2$ (5000 Pfund pro Quadratinch) und einer Temperatur im Bereich von -40°C bis 250°C, ohne undicht zu werden, zu widerstehen.

**2.** Ein Lichtleiter nach Anspruch 1, worin die Schicht (15) die thermoplastische Umhüllung (13) derart zusammenpreßt, daß die Querschnittsfläche der Umhüllung (13) um etwa 15 bis 25 % verkleinert worden ist.

**3.** Ein Lichtleiter nach Anspruch 1 oder 2, worin der Epoxidharzfilm (14) aus bei einer Temperatur von etwa 100°C für etwa 2 Stunden gehärtetem Epichlorhydrin/aromatischem Amin besteht.

**EP 0 231 581 B1**

4. Ein Lichtleiter nach Anspruch 1 oder 2, worin der Epoxidharzfilm (14) aus bei einer Temperatur von ungefähr 220°C fur etwa 4 Stunden gehärtetem Bis-Phenol A/Anhydrid besteht.

5. Ein Lichtleiter nach wenigstens einem der vorhergehenden Ansprüche, in welchem das thermoplastische Material der Umhüllung (13) ein Copolymer ist, welches den Kohlenstoff-Fluorinanteil von Fluorkarbonen mit Perfluoroalkoxy-Seitenketten kombiniert, oder ein Polyätherätherketon oder ein Äthylen-Tetra-Fluoroäthylen-Copolymer ist.

7